(19) Europäisches Patentamt
European Patent Office
Office européen des brevets

(11) **EP 4 257 305 A1**

(12) **EUROPEAN PATENT APPLICATION**

(43) Date of publication:
**11.10.2023 Bulletin 2023/41**

(21) Application number: **23165275.1**

(22) Date of filing: **29.03.2023**

(51) International Patent Classification (IPC):
***B25J 9/16*** (2006.01)

(52) Cooperative Patent Classification (CPC):
**B25J 9/1694;** G05B 2219/37388; G05B 2219/40547

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.04.2022 US 202217713371**

(71) Applicants:
• **General Electric Company
Schenectady, NY 12345 (US)**
• **Oliver Crispin Robotics Limited
Altrincham, Cheshire WA14 2DT (GB)**

(72) Inventors:
• **DANKO, Todd William
Niskayuna, 12309 (US)**
• **HAWKE, Trevor Owen
Bristol, BS34 7JU (GB)**
• **MELLUCCI, Chiara
Bristol, BS34 7JU (GB)**
• **KULKARNI, Ambarish
Niskayuna, 12309 (US)**

(74) Representative: **Openshaw & Co.
8 Castle Street
Farnham, Surrey GU9 7HR (GB)**

(54) **APPARATUS AND METHOD FOR TOOL MONITORING**

(57)    An apparatus (100) comprises a tool (102) having a first portion (103) and a second portion (104) that are separated by at least a first area of articulation (105). A first inertial measurement unit (108) is affixed with respect to that first portion and a second inertial measurement unit (109) is affixed with respect to that second portion. A control circuit (101) operably couples to those inertial measurement units and receives (301, 302) corresponding information regarding those portions of the tool.

The control circuit can then process (303) that received information to generate positional proprioception information as regards those monitored tool portions. By one approach, the control circuit generates that positional proprioception information by first determining an absolute orientation of each of the tool portions independent of one another and then calculating a differential pose as a function of the determined absolute orientation of those tool portions.

FIG. 1

**Description**

Technical Field

These teachings relate generally to the use of tools, and more particularly to the monitoring thereof.

Background

Some tools include one or more areas of articulation. So configured, one part of the tool can move independently with respect to another part of the tool. In some cases, such movement can be automatically controlled. To ensure efficacy of such movement, however, it can be important to understand the position(s) of such portions of the tool.

Brief Description of the Drawings

The above needs are at least partially met through provision of the apparatus and method for tool monitoring described in the following detailed description, particularly when studied in conjunction with the drawings, wherein:

FIG. 1 comprises a block diagram as configured in accordance with various embodiments of these teachings;

FIG. 2 comprises a block diagram as configured in accordance with various embodiments of these teachings;

FIG. 3 comprises a flow diagram as configured in accordance with various embodiments of these teachings;

FIG. 4 comprises a schematic representation as configured in accordance with various embodiments of these teachings; and

FIG. 5 comprises a schematic representation as configured in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

Detailed Description

Typical prior art solutions as regards understanding the position(s) of various portions of an articulated tool can be relatively expensive, physically cumbersome, and/or insufficiently accurate. In some cases, prior art solutions are not sufficiently capable of tracking all of the degrees of freedom of movement that may characterize a given application setting.

Generally speaking, pursuant to these various embodiments, an apparatus comprises a tool having a first portion and a second portion that are separated by at least a first area of articulation. A first inertial measurement unit is affixed with respect to that first portion and a second inertial measurement unit is affixed with respect to that second portion. A control circuit operably couples to those inertial measurement units and receives corresponding information regarding those portions of the tool. The control circuit can then process that received information to generate positional proprioception information as regards those monitored tool portions. These teachings will support generating that positional proprioception information without the use of through-drivetrain information. By one approach, the control circuit generates that positional proprioception information by first determining an absolute orientation of each of the tool portions independent of one another and then calculating a differential pose as a function of the determined absolute orientation of those tool portions.

These teachings will accommodate areas of articulation that provide two or three degrees of freedom of movement.

By one approach, the aforementioned inertial measurement units each includes at least three gravity-based orientation sensors, three non-gravitational acceleration sensors, and three magnetometers.

The resultant positional proprioception information can be employed in a variety of ways. As one example, that information can be used to determine whether the tool is properly moving. As another example, that information can be used to effect a closed-loop process involving the tool's movement.

So configured, movement of various portions of an articulated tool can be readily and accurately monitored in a reliable and cost-effective manner.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

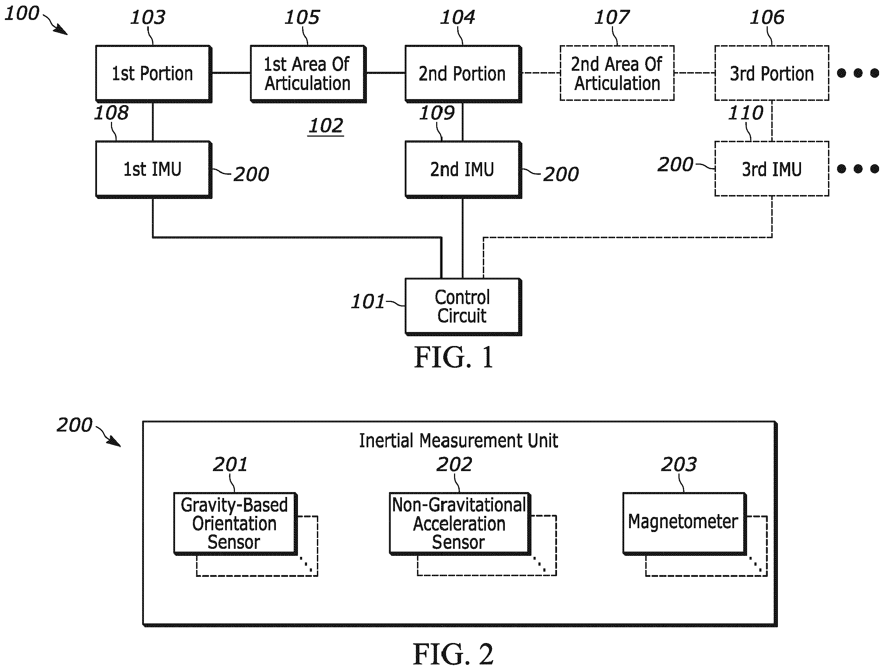

These and other benefits may become clearer upon making a thorough review and study of the following detailed description. Referring now to the drawings, and in particular to FIG. 1, an illustrative apparatus 100 that is compatible with many of these teachings will now be presented.

In this particular example, the enabling apparatus 100 includes a control circuit 101. Being a "circuit," the control circuit 101 therefore comprises structure that includes at least one (and typically many) electrically-conductive paths (such as paths comprised of a conductive metal such as copper or silver) that convey electricity in an ordered manner, which path(s) will also typically include corresponding electrical components (both passive (such as resistors and capacitors) and active (such as any of a variety of semiconductor-based devices) as appropriate) to permit the circuit to effect the control aspect of these teachings.

Such a control circuit 101 can comprise a fixed-purpose hard-wired hardware platform (including but not limited to an application-specific integrated circuit (ASIC) (which is an integrated circuit that is customized by design for a particular use, rather than intended for general-purpose use), a field-programmable gate array (FPGA), and the like) or can comprise a partially or wholly-programmable hardware platform (including but not limited to microcontrollers, microprocessors, and the like). These architectural options for such structures are well known and understood in the art and require no further description here. This control circuit 101 is configured (for example, by using corresponding programming as will be well understood by those skilled in the art) to carry out one or more of the steps, actions, and/or functions described herein.

By one optional approach the control circuit 101 operably couples to a memory (not shown). This memory may be integral to the control circuit 101 or can be physically discrete (in whole or in part) from the control circuit 101 as desired. This memory can also be local with respect to the control circuit 101 (where, for example, both share a common circuit board, chassis, power supply, and/or housing) or can be partially or wholly remote with respect to the control circuit 101 (where, for example, the memory is physically located in another facility, metropolitan area, or even country as compared to the control circuit 101).

This memory can serve, for example, to non-transitorily store the computer instructions that, when executed by the control circuit 101, cause the control circuit 101 to behave as described herein. (As used herein, this reference to "non-transitorily" will be understood to refer to a non-ephemeral state for the stored contents (and hence excludes when the stored contents merely constitute signals or waves) rather than volatility of the storage media itself and hence includes both non-volatile memory (such as read-only memory (ROM) as well as volatile memory (such as a dynamic random access memory (DRAM).)

If desired, the control circuit 101 can also operably couple to a network interface (not shown). So configured the control circuit 101 can communicate with other elements (both within the apparatus 100 and external thereto) via the network interface. Network interfaces, including both wireless and non-wireless platforms, are well understood in the art and require no particular elaboration here.

By yet another optional approach (in lieu of the foregoing or in combination therewith) the control circuit 101 may operably couple to a user interface (not shown). This user interface can comprise any of a variety of user-input mechanisms (such as, but not limited to, keyboards and keypads, cursor-control devices, touch-sensitive displays, speech-recognition interfaces, gesture-recognition interfaces, and so forth) and/or user-output mechanisms (such as, but not limited to, visual displays, audio transducers, printers, and so forth) to facilitate receiving information and/or instructions from a user and/or providing information to a user.

In this illustrative example, the apparatus 100 also comprises a tool 102 having at least a first portion 103 and a second portion 104 that are separated by a first area of articulation 105. In a typical application setting, these portions 103 and 104 will be solid, but these teachings are flexible in practice and may accommodate other possibilities. By one approach the first portion 103 connects physically to the second portion 104 via that first area of articulation 105 as a discrete point of rotation. In other embodiments, the area of articulation may be that of a soft or continuum robot so that rotations between 103 and 104 do not occur a discrete points, but are rather dispersed over an area of flexible material.

These teachings will accommodate various approaches to the aforementioned articulation. By one approach, the first area of articulation 105 provides at least two degrees of freedom of movement. By another approach, the first area of articulation 105 provides at least three degrees of freedom of movement (such as, for example, pitch, roll, and yaw). There are various approaches to articulation that are known in the art including resolute coupling, share, extension, contraction, and so forth. As the present teachings are not overly sensitive to any particular selections in these regards, further elaboration is not provided here regarding any particular form or modality of articulation.

These teachings will optionally accommodate a tool 102 having other portions and/or additional areas of articulation. As one illustrative example, and as shown in FIG. 1, the tool 102 may have a third portion 106 that is separated from the second portion 104 but which is connected thereto by a second area of articulation 107. As another illustrative example (not shown), a third portion could be separated from the first portion 103 but connected thereto by a second area of articulation.

In this illustrative example, a first inertial measurement unit (IMU) 108 is affixed with respect to the first portion 103 and a second inertial measurement unit 109 is affixed with respect to the second portion 104. To the extent that there are other tool portions that are separated from other tool portions by intervening areas of articulation, additional inertial measurement units can be provided as desired. For example, and as optionally shown in FIG. 1, a third tool portion 106 may have a third inertial measurement unit 110 affixed thereto. These teachings will accommodate a variety of approaches as regards affixing these inertial measurement units to their corresponding tool portions. By one approach the inertial measurement units are directly connected to their corresponding portion using, for example, an attachment mechanism and/or an adhesive.

Inertial measurement units are known in the art. By one approach, and referring momentarily to FIG. 2, each inertial measurement unit 200 can comprise one or more gravity-based orientation sensors 201, one or more non-gravitational acceleration sensors 202 (such as, for example, gyroscopic sensors or rate-gyroscopic sensors), and one or more magnetometers 203. For many application settings, the inertial measurement unit 200 may comprise three gravity-based orientation sensors 201, three non-gravitational acceleration sensors 202, and three magnetometers 203.

Referring again to FIG. 1, each of these inertial measurement units is communicatively coupled to the aforementioned control circuit 101 (for example, via a wireless or non-wireless modality). Generally speaking, inertial measurement units are electronic devices that measure and report a body's specific force, angular rate, and orientation. By providing three of each of the aforementioned sensors, an inertial measurement unit can provide information regarding each of the three principal axes, sometimes referred to as pitch, roll, and yaw. Configured as described above, these inertial measurement units can provide such information regarding each of their respective tool portions to the control circuit 101.

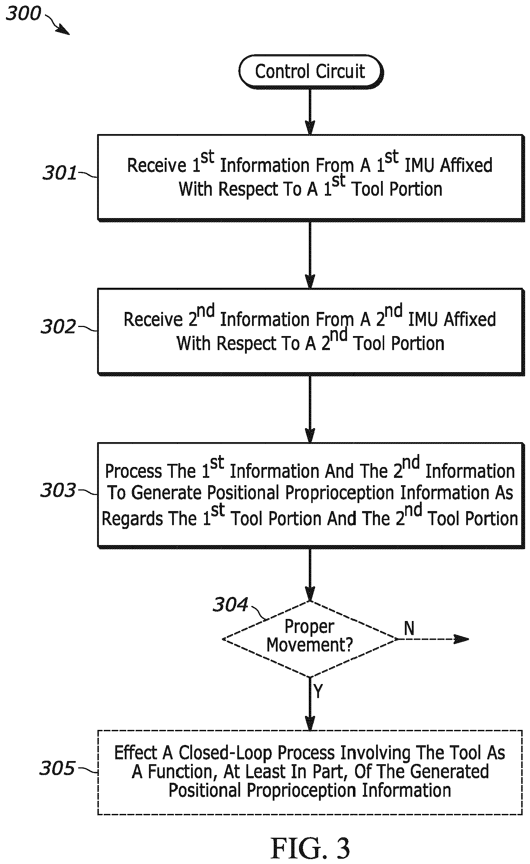

Referring now to FIG. 3, a process 300 that can be carried out by the aforementioned control circuit 101 will be described.

At block 301, the control circuit 101 receives first information from the aforementioned first inertial measurement unit 108 regarding the first portion 103. In this illustrative example this first information includes all of the aforementioned parameters pertaining to that first portion 103. At block 302, the control circuit 101 receives second information from the aforementioned second inertial measurement unit 109 regarding the second portion 104 where the second information again includes all of the aforementioned parameters pertaining to the second portion 104. (If and as the particular tool 102 includes additional portions such as the third portion 106 illustrated in FIG. 1, the control circuit 101 can receive additional corresponding information from the inertial measurement units (such as the illustrated third inertial measurement unit 110) regarding the monitored parameters for those additional portions.)

At block 303, the control circuit 101 processes the aforementioned received information to generate positional proprioception information as regards the monitored tool portions. By one approach, the control circuit 101 is configured to generate this positional proprioception information without use of through-drivetrain information. By one approach, the control circuit 101 is configured to generate this positional proprioception information by first determining an absolute orientation of each of the monitored tool portions independent of one another and then calculating a differential pose as a function of the determined absolute orientation of those monitored tool portions.

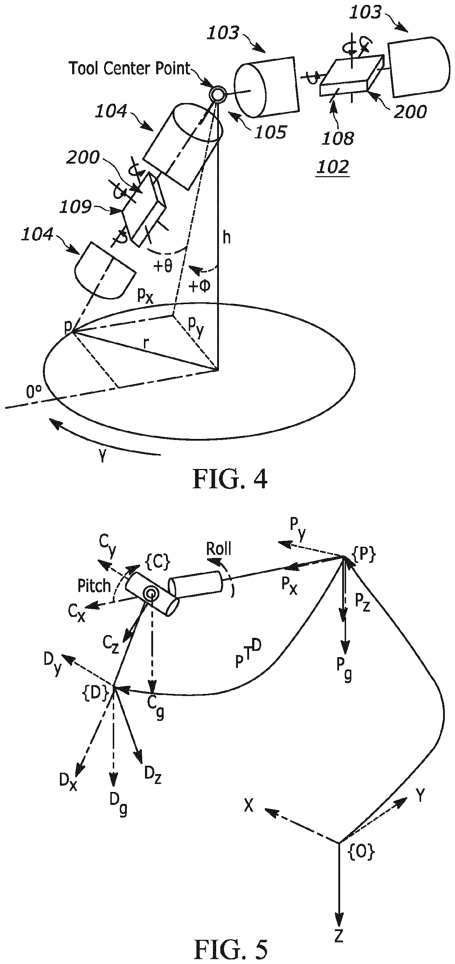

Referring momentarily to FIG. 4 and 5, additional details regarding the generation of such positional proprioception information will be provided. It will be understood that no specific limitations regarding these teachings are intended in these regards and that such additional details are intended to serve only an illustrative purpose.

In this example, the apparatus 100 measures gravitational acceleration along each axis of proximal (P) and distal (D) accelerometers that comprise a part of corresponding inertial measurement units 200 (represented here by the aforementioned first and second inertial measurement units 108 and 109 discussed above).

The orthogonal components of the direction of gravity as measured by the proximal body ($P_g$) and distal body ($D_g$) are: $P_{gx}$, $P_{gy}$, $P_{gz}$, $D_{gx}$, $D_{gy}$, $D_{gz}$

For convenience, these teachings provide for creating an intermediate control point (C) coordinate system such that C rolls around the x axis of proximal body, P, and distal body, D, pitches around the y axis of C such that the orientation, including roll, pitch and yaw, of D can be solved by calculating the chain from P to C to D by way of constrained roll and pitch angles along with measured yaw angles as coupled to roll and pitch though the following described mechanism (wherein "T" is notation for a transform that includes the rotations that are to be estimated, such that $_PT^C$ is the rotation from P to C and $_CT^D$ is the rotation from C to D, and wherein $P_x$ is the x axis of the sensor attached to the proximal body, $P_{gx}$ is the component of the acceleration of gravity mapped onto $P_x$, $P_{gy}$ and $P_{gz}$ along with $P_{gx}$ provide the components (and therefore orientation) of the acceleration gravity as measured by the proximal body sensor, and where the same is true for the distal body (there is no sensor on C)):

$$D = P \; _PT^C {}_C C_C T^D$$

Also in this example, motion is constrained such that:

$_PT^C$ contains a fixed transform and roll rotation that is only around $P_x$, therefore $C_x \parallel P_x$; and
$_CT^D$ contains a fixed transform and pitch rotation that is only around $C_y$, therefore $D_y \parallel C_y$.

Gravitational accelerations can be mapped based on these constraints:

$$C_{gx} = P_{gx}$$

$$C_{gy} = D_{gy}$$

Roll around $P_x$ is then the angle between $C_\phi$ and $P_\phi$. Accordingly:

$$\text{Roll} = C_\phi - P_\phi$$

where

$$\tan P_\phi = \left(\frac{P_{gy}}{P_{gz}}\right)$$

and

$$\tan C_\phi = \left(\frac{C_{gy}}{C_{gz}}\right) = \left(\frac{D_{gy}}{C_{gz}}\right)$$

In the foregoing, $C_{gz}$ is not measured, but assuming a static system (where, for example, g is known and constant), this variable can be calculated from:

$$g = \sqrt{C_{gx}^2 + C_{gy}^2 + C_{gz}^2} = \sqrt{P_{gx}^2 + D_{gy}^2 + C_{gz}^2} \rightarrow C_{gz} = \pm\sqrt{-P_{gx}^2 - D_{gy}^2 + g^2}$$

Pitch around $C_y$ is then the angle between $D_\theta$ and $C_\theta$. Accordingly:

$$\text{Pitch} = D_\theta - C_\theta$$

where

$$\tan C_\theta = \left( \frac{-C_{gx}}{\sqrt{C_{gy}^2 + C_{gz}^2}} \right) = \left( \frac{-P_{gx}}{\sqrt{D_{gy}^2 + C_{gz}^2}} \right)$$

and

$$\tan D_\theta = \left( \frac{-D_{gz}}{\sqrt{D_{gy}^2 + D_{gz}^2}} \right).$$

Referring again to FIG. 3 and FIG. 4, the generated positional proprioception information, such as estimated roll and pitch angles between the proximal 103 and distal 104 bodies, for these various portions of the tool 102 can be employed in any of a variety of ways. As one example, and as illustrated at optional block 304, the control circuit 101 can use that generated information to determine whether the tool 102 is properly moving in an intended or otherwise safe and/or efficacious manner. For example, the control circuit 101 can determine whether the tool 102 exhibits an error in pose (which may also be in error in velocity (including angular velocity) if the tool 102 is in motion. When such is not the case, these teachings will accommodate taking any of a variety of corresponding actions. Examples include providing an alert or alarm and/or taking a specific action with respect to the tool 102 itself (for example, by halting further movement or by reversing a just-completed previous movement).

As another example, and as illustrated at optional block 305, the control circuit 101 can effect a closed-loop process involving the tool 102 as a function, at least in part, of the generated positional proprioception information.

So configured, these teachings support using multiple inertial measurement units across multiple areas of articulation to support generating absolute references for orientation, the latter being suitable to enable, for example, initialization in any pose across multiple rotations/articulations without necessarily requiring further movement of the tool. These teachings can be employed with a wide variety of tools including, for example, articulated robot arms and so-called robotic snake arms.

Further aspects of the disclosure are provided by the subject matter of the following clauses:

1. An apparatus comprising: a tool having a first portion and a second portion separated by at least a first area of articulation; a first inertial measurement unit (IMU) affixed with respect to the first portion; a second IMU affixed with respect to the second portion; a control circuit operably coupled to the first IMU and the second IMU and configured to: receive first information from the first IMU regarding the first portion and receive second information from the second IMU regarding the second portion; process the first information and the second information to generate positional proprioception information as regards the first portion with respect to the second portion.

2. The apparatus of any preceding clause wherein the first area of articulation provides at least two degrees of freedom of movement.

3. The apparatus of any preceding clause wherein the first area of articulation provides at least three degrees of freedom of movement.

4. The apparatus of any preceding clause wherein the first IMU includes at least three gravity-based orientation sensors, three non-gravitational acceleration sensors, and three magnetometers.

5. The apparatus of any preceding clause wherein each of the first IMU and the second IMU includes at least three gravity-based orientation sensors, three non-gravitational acceleration sensors, and three magnetometers.

6. The apparatus of any preceding clause wherein the control circuit is configured to generate the positional proprioception information without use of through-drivetrain information.

7. The apparatus of any preceding clause wherein the control circuit is configured to generate the positional proprioception information by first determining an absolute orientation of each of the first portion and the second portion independent of one another and then calculating a differential pose as a function of the determined absolute orientation of the first portion and the determined absolute orientation of the second portion.

8. The apparatus of any preceding clause where the control circuit is further configured to: determine whether the tool is properly moving as a function of the generated positional proprioception information.

9. The apparatus of any preceding clause wherein the control circuit is further configured to: effect a closed-loop process involving the tool as a function, at least in part, of the generated positional proprioception information.

10. The apparatus of any preceding clause wherein the tool includes a third portion that is separated from the second portion by at least a second area of articulation, the apparatus further comprising: a third IMU affixed with respect to the third portion; and wherein the control circuit is further configured to: receive third information from the third IMU regarding the third portion; process the third information and at least one of the first information and the second information to generate positional proprioception information as regards the third portion with respect to at least one of the first portion and the second portion.

11. A method for use with an apparatus comprising: a tool having a first portion and a second portion separated by at least a first area of articulation; a first inertial measurement unit (IMU) affixed with respect to the first portion; a second IMU affixed with respect to the second portion; and a control circuit operably coupled to the first IMU and the second IMU; the method comprising, by the control circuit: receiving first information from the first IMU regarding the first portion and receiving second information from the second IMU regarding the second portion; processing the first information and the second information to generate positional proprioception information as regards the first portion with respect to the second portion.

12. The method of any preceding clause wherein the first area of articulation provides at least two degrees of freedom of movement.

13. The method of any preceding clause wherein the first area of articulation provides at least three degrees of freedom of movement.

14. The method of any preceding clause wherein the first IMU includes at least three gravity-based orientation sensors, three non-gravitational acceleration sensors, and three magnetometers.

15. The method of any preceding clause wherein each of the first IMU and the second IMU includes at least three gravity-based orientation sensors, three non-gravitational acceleration sensors, and three magnetometers.

16. The method of any preceding clause wherein processing the first information and the second information to generate positional proprioception information comprises generating the positional proprioception information without use of through-drivetrain information.

17. The method of any preceding clause wherein processing the first information and the second information to generate positional proprioception information comprises first determining an absolute orientation of each of the first portion and the second portion independent of one another and then calculating a differential pose as a function of the determined absolute orientation of the first portion and the determined absolute orientation of the second portion.

18. The method of any preceding clause further comprising, by the control circuit: determining whether the tool is properly moving as a function of the generated positional proprioception information.

19. The method of any preceding clause further comprising, by the control circuit: effecting a closed-loop process involving the tool as a function, at least in part, of the generated positional proprioception information.

20. The method of any preceding clause wherein the tool includes a third portion that is separated from the second portion by at least a second area of articulation and a third IMU affixed with respect to the third portion, and wherein the method further comprises, by the control circuit: receiving third information from the third IMU regarding the third portion; processing the third information and at least one of the first information and the second information to generate positional proprioception information as regards the third portion with respect to at least one of the first portion and the second portion.

Those skilled in the art will recognize that a wide variety of modifications, alterations, and combinations can be made with respect to the above-described embodiments without departing from the scope of the disclosure, and that such modifications, alterations, and combinations are to be viewed as being within the ambit of the inventive concept.

**Claims**

1. An apparatus (100) comprising:

   a tool (102) having a first portion (103) and a second portion (104) separated by at least a first area of articulation (105);
   a first inertial measurement unit (IMU) (108) affixed with respect to the first portion;
   a second IMU (109) affixed with respect to the second portion;
   a control circuit (101) operably coupled to the first IMU and the second IMU and configured to:

      receive (301) first information from the first IMU regarding the first portion and receive (302) second information from the second IMU regarding the second portion;
      process (303) the first information and the second information to generate positional proprioception information as regards the first portion with respect to the second portion.

2. A method for use with an apparatus comprising:

   a tool (102) having a first portion (103) and a second portion (104) separated by at least a first area of articulation (105);

      a first inertial measurement unit (IMU) (108) with respect to the first portion;
      a second IMU (109) affixed with respect to the second portion; and
      a control circuit (101) operably coupled to the first IMU and the second IMU;

   the method comprising, by the control circuit:

      receiving(301) first information from the first IMU regarding the first portion and receiving (302) second information from the second IMU regarding the second portion;
      processing (303) the first information and the second information to generate positional proprioception information as regards the first portion with respect to the second portion.

3. Any of the preceding claims wherein the first area of articulation (105) provides at least two degrees of freedom of movement.

4. Any of the preceding claims wherein the first area of articulation (105) provides at least three degrees of freedom of movement.

5. Any of the preceding claims wherein the first IMU (108) includes at least three gravity-based orientation sensors (201), three non-gravitational acceleration sensors (202), and three magnetometers (203).

6. Any of the preceding claims wherein each of the first IMU (108) and the second IMU (109) includes at least three gravity-based orientation sensors (201), three non-gravitational acceleration sensors (202), and three magnetometers (203).

7. Any of the preceding claims wherein the control circuit (101) is configured to generate the positional proprioception information without use of through-drivetrain information.

8. Any of the preceding claims wherein the control circuit (101) is configured to generate the positional proprioception information by first determining an absolute orientation of each of the first portion (103) and the second portion (104) independent of one another and then calculating a differential pose as a function of the determined absolute orientation of the first portion and the determined absolute orientation of the second portion.

9. Any of the preceding claims where the control circuit (101) is further configured to:
   determine whether the tool (102) is properly moving as a function of the generated positional proprioception information.

10. Any of the preceding claims wherein the control circuit (101) is further configured to:
    effect (305) a closed-loop process involving the tool (102) as a function, at least in part, of the generated positional proprioception information.

11. The apparatus of claim 1 wherein the tool (102) includes a third portion (106) that is separated from the second portion (104) by at least a second area of articulation (107), and wherein the apparatus further comprises:
    a third IMU (110) affixed with respect to the third portion (106);
    and wherein the control circuit (101) is further configured to:

    receive third information from the third IMU regarding the third portion;
    process the third information and at least one of the first information and the second information to generate positional proprioception information as regards the third portion with respect to at least one of the first portion and the second portion.

12. The method of claim 2 wherein the tool (102) includes a third portion (106) that is separated from the second portion (104) by at least a second area of articulation (107) and a third IMU (110) affixed with respect to the third portion (106), and wherein the method further comprises, by the control circuit (101):

    receiving third information from the third IMU (110) regarding the third portion;
    processing the third information and at least one of the first information and the second information to generate positional proprioception information as regards the third portion with respect to at least one of the first portion and the second portion.

FIG. 1

FIG. 2

EP 4 257 305 A1

*300*

Control Circuit

*301* — Receive 1<sup>st</sup> Information From A 1<sup>st</sup> IMU Affixed With Respect To A 1<sup>st</sup> Tool Portion

*302* — Receive 2<sup>nd</sup> Information From A 2<sup>nd</sup> IMU Affixed With Respect To A 2<sup>nd</sup> Tool Portion

*303* — Process The 1<sup>st</sup> Information And The 2<sup>nd</sup> Information To Generate Positional Proprioception Information As Regards The 1<sup>st</sup> Tool Portion And The 2<sup>nd</sup> Tool Portion

*304* — Proper Movement? — N

Y

*305* — Effect A Closed-Loop Process Involving The Tool As A Function, At Least In Part, Of The Generated Positional Proprioception Information

FIG. 3

FIG. 4

FIG. 5

Europäisches
Patentamt

European
Patent Office

Office européen
des brevets

# EUROPEAN SEARCH REPORT

Application Number

EP 23 16 5275

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/061835 A1 (HADDADIN SAMI [DE] ET AL) 27 February 2020 (2020-02-27) | 1-4,7, 9-12 | INV. B25J9/16 |
| Y | * figure 3 * <br> * paragraph [0006] * <br> * paragraph [0010] * <br> * paragraph [0016] * <br> * paragraph [0034] * <br> ----- | 5,6,8 | |
| Y | CN 204 636 378 U (UNIV BEIJING NORMAL) 16 September 2015 (2015-09-16) <br> * paragraph [0006] * <br> ----- | 5,6 | |
| Y | ZHANG ZHIQIANG ET AL: "Snake robot shape sensing using micro-inertial sensors", 2013 IEEE/RSJ INTERNATIONAL CONFERENCE ON INTELLIGENT ROBOTS AND SYSTEMS(ROS), IEEE, 3 November 2013 (2013-11-03), pages 831-836, XP032537470, ISSN: 2153-0858, DOI: 10.1109/IROS.2013.6696447 [retrieved on 2013-12-26] <br> * Last paragraph of section I * <br> ----- | 8 | |

TECHNICAL FIELDS SEARCHED (IPC)

B25J

The present search report has been drawn up for all claims

| Place of search | Date of completion of the search | Examiner |
|---|---|---|
| The Hague | 16 August 2023 | Lefeure, Guillaume |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................

& : member of the same patent family, corresponding document

EPO FORM 1503 03.82 (P04C01)

**EP 4 257 305 A1**

## ANNEX TO THE EUROPEAN SEARCH REPORT
## ON EUROPEAN PATENT APPLICATION NO.

EP 23 16 5275

This annex lists the patent family members relating to the patent documents cited in the above-mentioned European search report.
The members are as contained in the European Patent Office EDP file on
The European Patent Office is in no way liable for these particulars which are merely given for the purpose of information.

16-08-2023

| Patent document cited in search report | Publication date | Patent family member(s) | Publication date |
|---|---|---|---|
| US 2020061835 A1 | 27-02-2020 | CN 110662635 A | 07-01-2020 |
| | | EP 3634695 A1 | 15-04-2020 |
| | | JP 7015068 B2 | 02-02-2022 |
| | | JP 2020521645 A | 27-07-2020 |
| | | KR 20200033806 A | 30-03-2020 |
| | | SG 11201910185T A | 30-01-2020 |
| | | US 2020061835 A1 | 27-02-2020 |
| | | WO 2018219952 A1 | 06-12-2018 |
| CN 204636378 U | 16-09-2015 | NONE | |